(19) Europäisches Patentamt
European Patent Office
Office européen des brevets

(11) Publication number: 0 234 085 B1

(12) # EUROPEAN PATENT SPECIFICATION

(45) Date of publication of the patent specification: 19.09.90

(51) Int. Cl.[5]: C08L 63/00

(21) Application number: 86305783.2

(22) Date of filing: 28.07.86

(54) **Epoxy resin encapsulating composition.**

(30) Priority: 08.02.86 JP 26115/86

(43) Date of publication of application: 02.09.87 Bulletin 87/36

(45) Publication of the grant of the patent: 19.09.90 Bulletin 90/38

(84) Designated Contracting States: DE GB NL

(56) References cited:
US-A- 3 516 964
US-A- 4 287 326

PATENT ABSTRACTS OF JAPAN, unexamined applications , section C, vol. 3, no. 152, December 14, 1979,THE PATENT OFFICE JAPANESE GOVERNMENT, page 92 C 67
PATENT ABSTRACTS OF JAPAN; unexamined applications, field C, vol. 7, no. 161, July 15, 1983, THE PATENT OFFICE JAPANESE GOVERNMENT, page 15 C 176

(73) Proprietor: MATSUSHITA ELECTRIC WORKS, LTD., 1048, Oaza-kadoma, Kadoma-shi Osaka 571(JP)

(72) Inventor: Torii, Munetomo c/o Matsushita Electric Works Ltd., 1048 Oaza Kadoma, Kadoma-shi Osaka-fu(JP)
Inventor: Kyotani, Yasuhiro c/o Matsushita Electric Works Lt, 1048 Oaza Kadoma, Kadoma-shi Osaka-fu(JP)
Inventor: Kagawa, Hirohiko c/o Matsushita Electric Works Lt, 1048 Oaza Kadoma, Kadoma-shi Osaka-fu(JP)
Inventor: Okabe, Hideki c/o Matsushita Electric Works Lt, 1048 Oaza Kadoma, Kadoma-shi Osaka-fu(JP)

(74) Representative: Beresford, Keith Denis Lewis et al, BERESFORD & Co. 2-5 Warwick Court High Holborn, London WC1R 5DJ(GB)

EP 0 234 085 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is directed to an epoxy resin encapsulating composition for electronic components, particularly semiconductor devices such as transistors and integrated circuits.

It has been a common industry practice to package or encapsulate electronic components ranging from discrete elements such as capacitors, diodes, transistors, thyristors, and Hall elements to integrated devices such as IC or LSI chips in order to protect the components mechanically and electrically from possible harmful external environments. For this purpose, there have been provided well known techniques of making hermetic, ceramic, or plastic packages. Among these the plastic, especially epoxy resin encapsulation technique has been widely accepted by the current industry standard in view of its cost effectiveness as well as mass productivity. However, when adapting the epoxy resin encapsulation to the present day's electronic components which are required to be made more and more compact while their sizes are increasingly made larger for enabling more sophisticated functions, the epoxy resin encapsulation is found to be incompatible with such demands as it suffers from a poor moisture resistance as well as an increased internal stress which will certainly impair the electrical characteristics of the components being encapsulated.

Such internal stress is believed to result from the shrinkage at the curing of the epoxy resin and from the difference in the coefficient of liner expansion between the epoxy resin and electronic components being encapsulated or the lead frame thereof. When the internal stress is developed significantly in the encapsulation, it eventually results in the presence of cracks in a passivation layer on the semiconductor device, which may cause the misregister of the leads or bonding wires, or may damage the same. Further, the excessive internal stress may frequently result in the presence of cracks in the semiconductor itself to destroy the same.

The poor moisture resistance is believed to result from the heat impact or stress at the soldering. Consequently, the moisture resistance will be reduced to an unacceptable level when the package is required to have a thinner protection wall in keeping with the miniaturization demand of the package, which forces the package to be exposed to considerable influence of the heat impact.

For retarding the development of the internal stress while preventing the lowering of the moisture resistance, an attempt has been made to incorporate certain additives to the epoxy resin. For instance, suitable inorganic fillers are known as the effective additives for reducing the internal stress since they act to lower the coefficient of liner expansion of the encapsulating composition to thereby keep the internal stress at a minimum. But the excessive amount of such fillers will lead to undue increase in the elastic modulus which adversely lowers the moisture resistance in addition to rendering the encapsulation to be exposed to harmful repeated heat stresses. Thermoplastic elastomers or liquid denatured butadiene rubbers are also known as the effective additive for inhibiting the internal stress. However, such additives are found to lower the glass transition temperature of the resulting epoxy resin composition as well as to frequently result in more amount of impurity ions such as $Na^+$ and $C1^-$ contained in the composition, thus lowering the moisture resistance. Further, silicon oils are also known to inhibit the development of the internal stress when added to the epoxy resin. But unfortunately due to poor compatibility between the silicon oil and the epoxy resin, the silicon oils are likely to bleed at the encapsulation molding and fails to provide complete sealing or adhesion between the encapsulation and the semiconductor devices or the lead frame thereof, thus lowering the moisture resistance.

In order to solve the above inconsistency between the reduced internal stress and the enhanced moisture resistance, an attempt is made as taught in U.S. Pat. No. 3,849,187 granted to Fetscher et al. in which a lower alkyl poly-lower alkoxy silane having a substituent in the alkyl group reactive with the epoxy resin is added in the epoxy resin. However, this attempt was also found not to be entirely satisfactory in assuring less internal stress developed in the package without reducing the moisture resistance thereof.

In view of the above, the inventors have examined several kinds of silicon compounds having individual functional groups with due consideration on the compatibility and reactivity with the epoxy resin or curing agents thereof and found that the reaction product of certain silicon compounds with different functional groups will lower the elastic modulus, i.e., will inhibit the development of the internal stress in question without reducing the moisture resistance expected to the epoxy resin. Included in the silicon compounds which form the advantageous reaction products exhibiting good compatibility and reactivity are those having functional groups such as epoxy, amino, hydroxyl, and carboxyl groups. The epoxy resin encapsulating composition incorporating thus obtained silicon product is found to produce substantially no bleed at the encapsulation molding and assure excellent sealing or adhesion property.

The present invention provides an epoxy encapsulating composition comprising a blend of

(a) an epoxy resin; and

(b) a silicon product which is present in the blend in an amount of 0.5 to 30 parts by weight per 100 parts by weight of the epoxy resin and which is a reaction product of at least two silicon compounds having different functional groups that react together to form a linkage between them, the functional group of the silicon compounds being epoxy, amino, hydroxyl, carboxyl, cyano or mercapto groups.

Addition of the silicon product in an amount from 0.5 to 30 parts by weight to 100 parts by weight of the epoxy resin can provide an internal-stress-free and moisture resistant epoxy encapsulation composition which is advantageous for the purposes of thin-wall encapsulation. Conventional fillers, mold release agents, and activators may be incorporated in the composition.

The epoxy resin applicable to the present invention can be selected from any normally used epoxy resins which are widely utilized to formulate the conventional epoxy resin molding compositions including bisphenol A type resin, phenol novolac type resin and cresol novolac type resin. Preferably, phenol novolac type and cresol novolac type resins are utilized to obtain satisfactory moisture resistance which have epoxy equivalent weights of less than 300 and from which are removed as much as possible impurity ions such as $Na^+$ and $C1^-$ liable to corrode the semiconductor device to be encapsulated.

The curing agent for the epoxy resin is also well known in the art and can be selected solely or in combination from the group consisting of amines; acid anhydrides such as maleic anhydride, succinic anhydride, phthalic anhydride, tetrahydrophthalic anhydride; and novolac type phenol resins such as phenol novolacs, cresol novolacs, tert-butyl phenol novolacs, and nonyl phenol novolacs. In view of improving the moisture-proof and molding characteristics, a preferred curing agent for the epoxy resins is found to be phenol novolacs or the combination of phenol novolacs and acid anhydrides. In the latter case, the combination is preferred to have added number of phenolic hydroxyl groups and anhydrous carboxyl groups about 0.5 to 1.5 times equivalent of the epoxy groups in the epoxy resins. Outside of the above preferred range of between 0.5 and 1.5, the curing reaction will not proceed to a sufficient extent to thereby deteriorate the characteristics of the cured composition.

Suitable fillers for the epoxy resin encapsulating composition are well known to be inorganic fillers such as quartz glass powder, crystalline silica powder, glass fiber, talc, alumina powder, calcium silicate powder, calcium carbonate powder, and barium sulfate powder. One or more kinds of the above fillers can be utilized in the present invention, and preferably quartz glass or crystalline silica powder is selected as exhibiting inherent low coefficient of heat expansion as well as being obtainable in high purity. The amount of such fillers to be incorporated will vary depending upon the kinds of the epoxy resins, curing agents, and the fillers employed. In general, when the encapsulating composition is to be molded by transfer molding, the filler is preferred to be added in the amount of 1.5 to 4 times by weight the added amount of the epoxy resin and the curing agent. The size of the fillers may be optionally chosen in a manner as to improve the molding characteristics, for example, differing sized fillers can be admixed for this purpose.

Similarly, suitable mold release agents applicable to the present encapsulating composition include natural wax, synthetic wax, metallic salts of straight-chain fatty acids, acid amides, and esters.

The activators which may be optionally employed comprise one or more of the conventional activators such as imidazoles, 1.8-diaza-bicyclo(5,4,0) undecene, salts thereof, and organic phosphines. Included in the imidazoles are, for example, 2-methyl imidazole, 1-cyanoethyl-2-ethyl-4-methyl imidazole, 2-phenyl imidazole, 2-undecyl imidazole, and 2-heptadecyl imidazole. Included in the salts of 1.8-diaza-bicyclo-(5,4,0) undecene are those with phenoles, 2-ethylhexanoic acid, oleic acid, and acid carbonates. Included in the organic phosphines are triphenylphosphine, tricyclophosphine, tributylphoshine, and methyldiphenylphoshine.

The epoxy resin encapsulating composition may additionally include flame retardants such as chlorinated paraffin, bromotoluene, hexabromobenzene, and antimony trioxide; colorants such as carbon black; and silane coupling agents.

Preparation of the above composition can be made with any known procedures, for example, by blending the suitable amounts of the components of the composition intended in a suitable mixer followed by melting the resultant mixture between hot roll, or by feeding the components to a suitable kneader for blending thereat.

Desired silicon compounds forming the reaction product to be incorporated in the epoxy encapsulation composition in accordance with the present invention are those including different functional groups reactive with each other and with the epoxy resin or the curing agent thereof, and having the following general formula I or II.

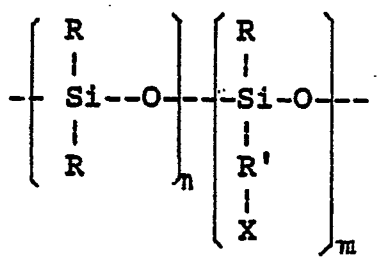

[I]

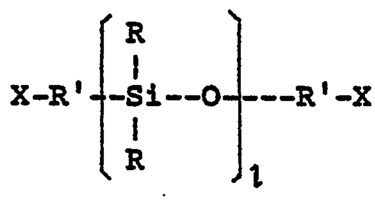

[II]

wherein R is a hydrogen or monovalent hydrocarbon group, R′ is a divalent hydrocarbon group, X is a functional group selected from the group consisting of epoxy, amino, hydroxyl, and carboxyl groups which are reactive with each other to form the above silicon reaction product and reactive with the epoxy resin or the curing agent thereof, l, m, and n are integers advantageously from 50 to 500, from 2 to 100, and 50 to 500 respectively, although they are not limited to those numbers.

Preferred R are hydrogen, methyl, ethyl, propyl, vinyl, and benzyl groups, and preferred R′ are aliphatic groups having from 2 to 15 carbon atoms, for example, methylene, ethylene, propylene, and butylene groups. The aliphatic groups having 16 or more carbon atoms are rejected since they have lower glass transition temperature which is the cause of lowering of the moisture resistance to an unacceptable extent. Although the number of the functional groups X to be included in the silicon compound is not limited, it is preferred to be from 2 to 100 per one molecule of the silicon compound for ensuring a satisfactory reaction process.

Suitable R′- X combination in the above formulae [I] and [II] are as follows:

$-CH_2CH_2-OH$ (terminal carbinol)

$-CH_2CH_2CH_2-OH$ (γ-hydroxylpropyl)

$-CH_2CH_2CH_2-NH_2$ (γ-aminopropyl)

$-CH_2CH_2CH_2NHCH_2CH_2-NH_2$ (NB[aminoethyl] γ-aminopropyl)

$-CH_2CH_2CH_2-COOH$ (γ-carboxypropyl)

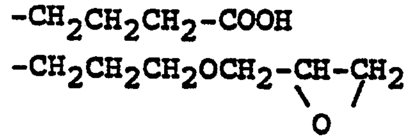 (γ-glycydopropyl)

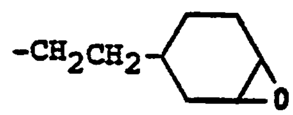 (ß[3,4 epoxycychlohexyl]ethyl)

$-CH_2CH_2CH_2-CN$ (γ-cyanopropyl)

$-CH_2CH2CH_2-SH$ (γ-mercaptopropyl)

The above reaction product to be incorporated in the epoxy resin encapsulating composition can be obtained from the reaction of two or more of the silicon compounds having different functional groups which are indicated in the above to be selected from the group consisting of hydrocarbon, amino, carboxyl, epoxy, cyano, and mercapto groups, in such a condition as to leave the fractions of different functional groups of the silicon compounds remain unlinked. These remaining functional groups are responsible for linking with the epoxy resin or the curing agent thereof. However, considering that the silicon compounds having the latter two functional groups, or γ-cyanopropyl and γ-mercaptopropyl exhibit rather greater volume resistivity or poor insulation performance, these silicon compounds are unsatisfactory for the encapsulating material. Thus, preferred functional groups are hydrocarbon, amino, carboxyl, and epoxy groups. Typical silicon reaction products obtained from the above silicon compounds are illustrated in the following:

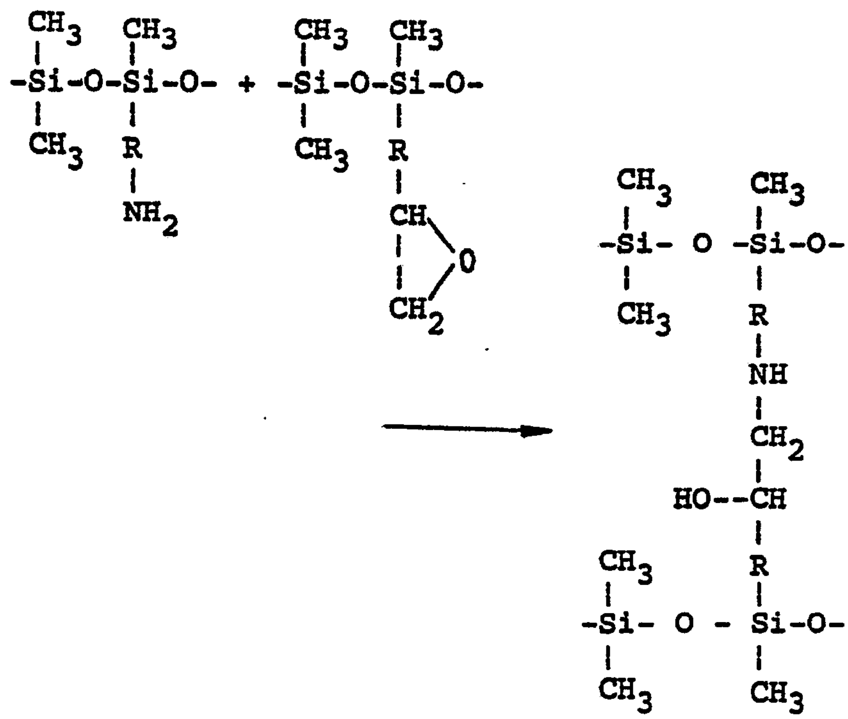

[A]

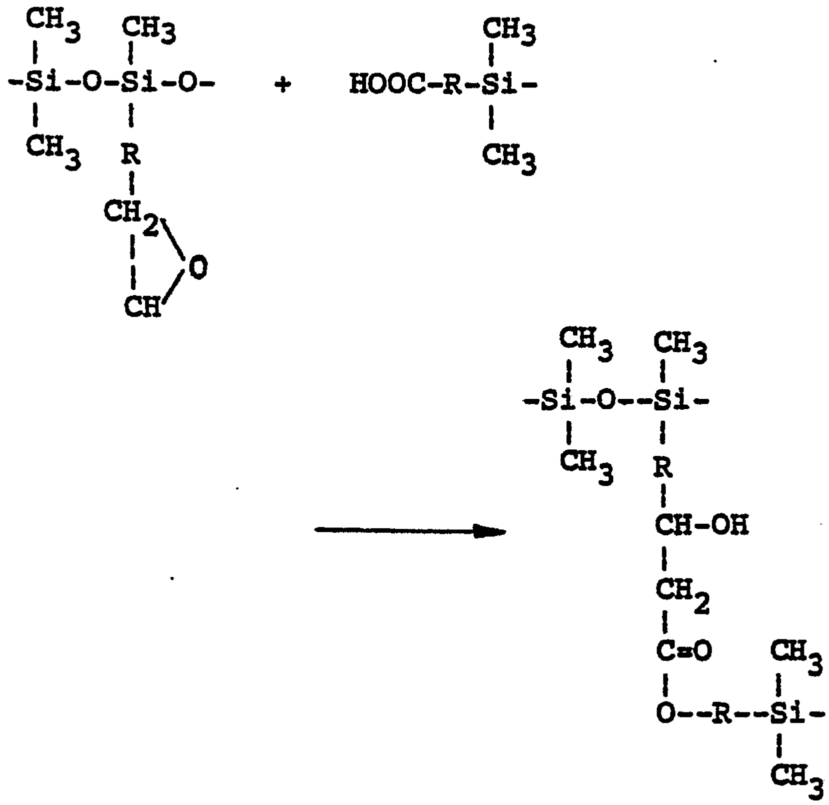

[B]

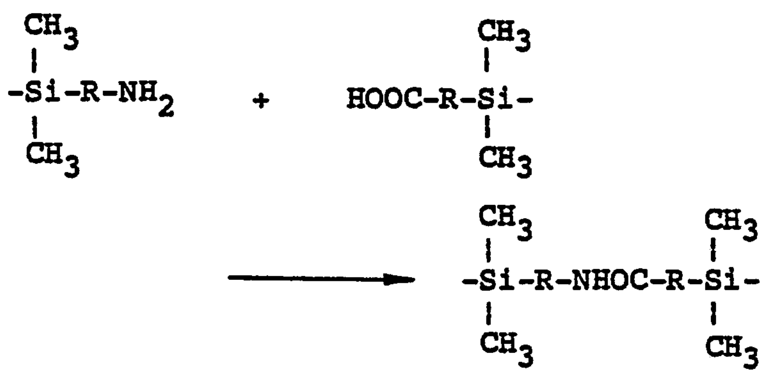

[C]

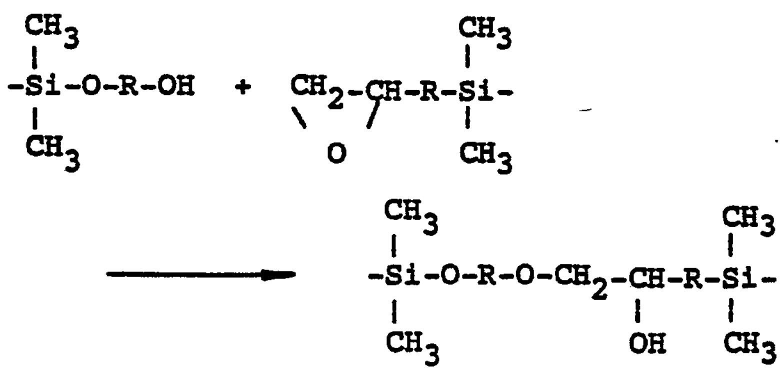

[D]

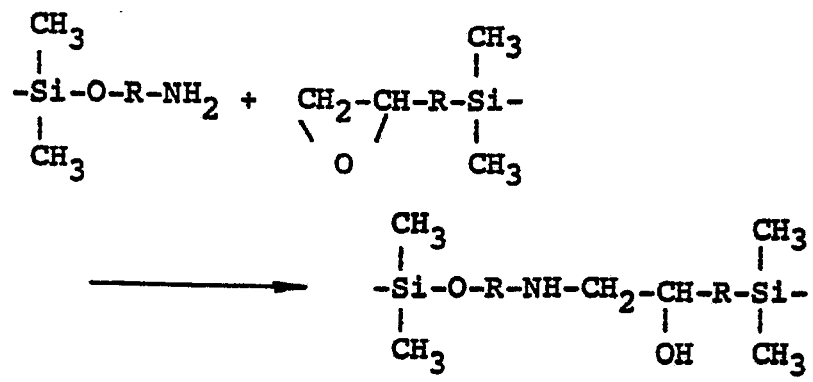

[E]

The above reaction can be carried out, for example, by feeding two or more silicon compounds having different functional groups, optionally together with one or more of the other encapsulating composition forming components such as the epoxy resin, curing agent, activator to a suitable kneader for blending the compounds at a temperature of between 60°C and 150 °C for 3 to 18 hours so as to obtain a viscous and gel-like silicon reaction product, although the reaction condition is not limited to the above.

The silicon reaction product thus obtained is appropriately incorporated in the epoxy resin encapsulating composition of the present invention in a amount of 0.5 to 30, preferably from 3 to 20, parts by weight with respect to 100 parts by weight of the epoxy resin, since effective reduction of the internal stress in the encapsulation or package is not expected with not more than than 0.5 parts of the silicon product, and mechanical strength thereof will be reduced down to an unacceptable level with not less than 30 parts thereof, which reduction in the mechanical strength would be the cause of cracks in the package when subjected to heat impact at the soldering or repeated heat stresses.

It is desirable for the epoxy encapsulating composition of the present invention to only show the electrical conductivity less than 200, preferably 100 μS/cm when exposed in boiling water. The electrical conductivity is the very informative value of the amount of impurity ions such as $Na^+$ and $Cl^-$ possibly present in the epoxy resin and leading to the lowering of the moisture resistance. The electrical conductivity can be determined according to the test procedure as fully described later with reference to the evaluation of physical and electric properties of the epoxy resin encapsulation composition.

For a reason that is not completely understood, the incorporation of the novel reaction silicon products serves to reduce or relax the internal stress developed in the encapsulation as well as for enhancing the moisture resistance. But, it appears that the combination effect of the inherent macromolecular structure of the reaction product of the silicon compounds and the reactability of the functional groups of the silicon compounds with the epoxy resin or curing agents thereof gives rise to the reduction in the internal stress developed in the encapsulation as well as to improve the moisture resistance. The parts of functional groups of the silicon compounds remain unlinked in obtaining the reaction product of such silicon compounds so as to be linked with the epoxy resin or the curing agent thereof.

The present invention is further illustrated by way of the following examples without being limited thereto and evaluated through standard tests in comparison with the comparative examples. The particular components and their amounts used in the examples including the comparative examples are listed in Table together with the test results. In the Table all parts are by weight. The details of the tests will be described later.

TABLE

| | | | EXAMPLES 1 | 2 | 3 | 4 | 5 | 6 | 7 | 8 | 9 |
|---|---|---|---|---|---|---|---|---|---|---|---|
| COMPONENTS/PARTS | epoxy resin | orthocresol novolac epoxy resin [epoxy eq. weight 195, s.p. 75°C] | 160 | 160 | 160 | 160 | 120 | 140 | 160 | 160 | 140 |
| | | brominated epoxy resin [epoxy eq. weight 250, s.p. 90°C] | 20 | 20 | 20 | 20 | 20 | 20 | 20 | 20 | 20 |
| | curing agent | tetrahydrophtalic anhydride | - | - | - | - | - | - | 50 | - | - |
| | | phenol novolac [OH eq. weight 110, s.p 80°C] | 90 | 90 | 90 | 90 | 70 | 80 | 50 | 50 | 80 |
| | inorganic fillers | antimony trioxide [av. particle size 5μ] | 30 | 30 | 30 | 30 | 30 | 30 | 30 | 30 | 30 |
| | | fused silica [av. particle size 20μ] | 640 | 640 | 640 | 640 | 640 | 640 | 640 | 640 | - |
| | | crystalline silica [av. particle size 14μ] | - | - | - | - | - | - | - | - | 640 |
| | colorant | carbon black | 4 | 4 | 4 | 4 | 4 | 4 | 4 | 4 | 4 |
| | mold release agent | carnauba wax | 6 | 6 | 6 | 6 | 6 | 6 | 6 | 6 | 6 |
| | activator | 2-undecyl imidazole [s.p. 45 - 50°C] | 3 | 3 | 3 | 3 | 3 | 3 | 3 | 3 | 3 |
| | silicon reaction coupling agent | γ-glydoxypropyltrimethoxysilane | 4 | 4 | 4 | 4 | 4 | 4 | 4 | 4 | 4 |
| | silicon reaction product | reaction product A | 2 | 10 | 50 | - | - | - | - | - | 20 |
| | | reaction product B | - | - | - | 10 | 10 | - | - | - | - |
| | | reaction product C | - | - | - | - | - | 10 | - | - | - |
| | | reaction product D | - | - | - | - | - | - | 20 | 50 | - |
| | other epoxy resin improving additive | liquid acrylonitrile butadiene rubber | - | - | - | - | - | - | - | - | - |
| | | solid acrylonitrile butadiene rubber | - | - | - | - | - | - | - | - | - |
| | | amino denatured silicon compound | - | - | - | - | - | - | - | - | - |
| | | epoxy denatured silicon compound | - | - | - | - | - | - | - | 10 | - |
| EVALUATION | moisture resistance | electrical conducvtivity [μS/cm] | 47 | 54 | 72 | 62 | 50 | 57 | 54 | 52 | 51 |
| | | pressure cooker test for 50 hours | 0 | 0 | 0 | 0 | 0 | 0 | 0 | 0 | 0 |
| | | pressure cooker test for 100 hours | 1 | 0 | 0 | 0 | 0 | 0 | 8 | 0 | 0 |
| | | pressure cooker test for 150 hours | 4 | 0 | 1 | 1 | 0 | 0 | 12 | 0 | 5 |
| | | pressure cooker test for 200 hours | 10 | 5 | 7 | 7 | 7 | 6 | 17 | 2 | 9 |
| | internal stress | ·piezoelectric resistance ratio of change (ΔR/R)% | -12 | -8 | -5 | -8 | -6 | -7 | -8 | -5 | -12 |
| | | ·observation of crack in package | 0 | 0 | 0 | 0 | 0 | 0 | 0 | 0 | 0 |
| | | ·observation of crack in passivation *1 | Δ | 0 | 0 | 0 | 0 | 0 | 0 | 0 | Δ |

* 1) hygroscopic condition at 85°C, 85 RH%, for 72 hours; and soldering condition at 260°C for 10 sec.

TABLE cont'd

| | | | | COMPARATIVE EXAMPLES 1 | 2 | 3 | 4 | 5 | 6 |
|---|---|---|---|---|---|---|---|---|---|
| COMPONENTS/PARTS | epoxy resin | orthocresol novolac epoxy resin [epoxy eq. weight 195, s.p. 75°C] | | 160 | 160 | 160 | 160 | 160 | 160 |
| | | brominated epoxy resin [epoxy eq. weight 250, s.p. 90°C] | | 20 | 20 | 20 | 20 | 20 | 20 |
| | curing agent | tetrahydrophtalic anhydride | | - | - | 50 | - | - | - |
| | | phenol novolac [OH eq. weight 110, s.p 80°C] | | 90 | 90 | 50 | 90 | 90 | 90 |
| | inorganic fillers | antimony trioxide [av. particle size 5μ] | | 30 | 30 | 30 | 30 | 30 | 30 |
| | | fused silica [av. particle size 20μ] | | 640 | 640 | 640 | 640 | 640 | 640 |
| | | crystalline silica [av. particle size 14μ] | | - | - | - | - | - | - |
| | colorant | carbon black | | 4 | 4 | 4 | 4 | 4 | 4 |
| | mold release agent | carnauba wax | | 6 | 6 | 6 | 6 | 6 | 6 |
| | activator | 2-undecyl imidazole [s.p. 45 - 50°C] | | 3 | 3 | 3 | 3 | 3 | 3 |
| | silicon reaction coupling agent | γ-glydoxypropyltrimethoxysilane | | 4 | 4 | 4 | 4 | 4 | 4 |
| | silicon reaction product | reaction product A | | - | - | - | - | - | 100 |
| | | reaction product B | | - | - | - | - | - | - |
| | | reaction product C | | - | - | - | - | - | - |
| | | reaction product D | | - | - | - | - | - | - |
| | other epoxy resin improving additive | liquid acrylonitrile butadiene rubber | | - | 10 | 10 | - | - | - |
| | | solid acrylonitrile butadiene rubber | | - | - | - | - | 10 | - |
| | | amino denatured silicon compound | | - | - | - | 10 | 10 | - |
| | | epoxy denatured silicon compound | | - | - | - | - | - | - |
| EVALUATION | moisture resistance | electrical conducvtivity [μS/cm] | | 45 | 84 | 92 | 62 | 280 | 82 |
| | | pressure cooker test | for 50 hours | 6 | 5 | 16 | 0 | 12 | 0 |
| | | pressure cooker test | for 100 hours | 20 | 17 | 20 | 3 | 20 | 0 |
| | | pressure cooker test | for 150 hours | 20 | 20 | 20 | 7 | 20 | 1 |
| | | pressure cooker test | for 200 hours | 20 | 20 | 20 | 13 | 20 | 7 |
| | internal stress | ·piezoelectric resistance ratio of change (ΔR/R)% | | -14 | -10 | -10 | -7 | -7 | -3 |
| | | ·observation of crack in package | | O | O | O | O | O | X |
| | | ·observation of crack in passivation *1 | | X | X | X | O | O | O |

* 1) hygroscopic condition at 85°C, 85 RH%, for 72 hours; and soldering condition at 260°C for 10 sec.

The silicon reaction products A, B, C, and D used in the Examples are prepared as follows:

## Silicon product A

200 g of epoxy denatured silicon compound having the following general formula [i] including epoxy groups as the functional group were fed to a suitable kneader together with 100 g of amino denatured silicon compound having the following general formula [ii] including amino groups. The resulting mixture was blended and reacted in the kneader at a temperature of 150°C for 5 hours to provide a pale-yellowish gel-like silicon product.

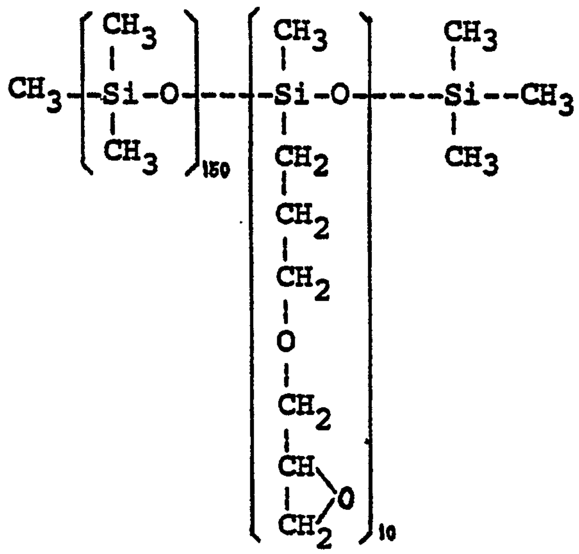

[i]

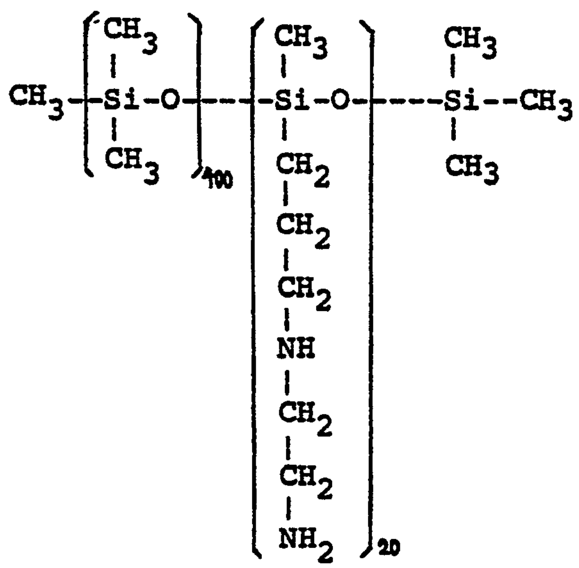

[ii]

## Silicon product B

100 g of epoxy denatured silicon compounds having the following general formula [iii] including epoxy groups were fed to a suitable kneader together with 10 g of amino denatured silicon compound having the above general formula [iv] including amino groups, and with 100 g of silicon compounds having the following general formula [v] including carboxyl groups as the functional group. The resulting mixture was blended and reacted in the kneader at a temperature of 120°C for 10 hours to provide a pale-yellowish gel-like silicon product.

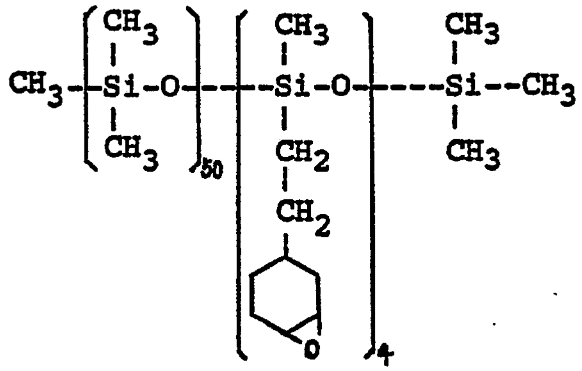

[iii]

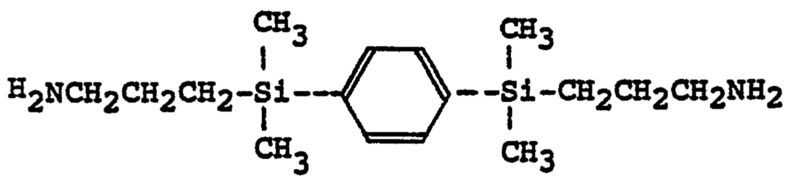

[iv]

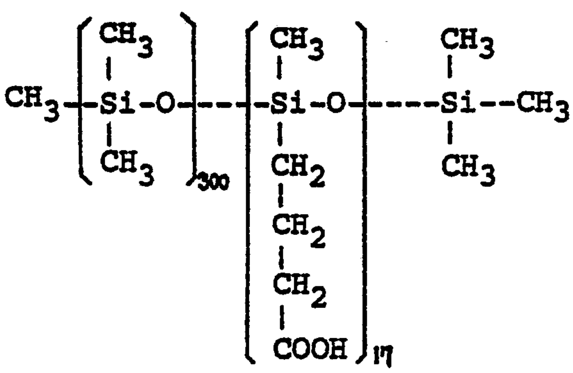

[v]

Silicon product C

100 g of epoxy denatured silicon compounds having the above general formula [i] including epoxy groups were fed to a suitable kneader together with 100 g of amino denatured silicon compound having the above general formula [ii] including amino groups, and with 100 g of fused silica having an average particle size of 5 μ and electrical conductivity of 2 μS/cm. The resulting mixture was blended and reacted in the kneader at a temperature of 150°C for 5 hours to provide a solid silicon product.

Silicon product D

100 g of epoxy denatured silicon compounds having the above general formula [iii] including epoxy groups, and 100 g of amino denatured silicon compound having the above general formula [ii] including amino groups were gradually added over 20 minutes within a flask to 800 g of a molten phenol novolac with stirring which had been heated to a temperature of 130°C. The phenol novolac used was of the same kind as used as the curing agent for the epoxy resin intended and has a molecular weight of about 800, a softening point of 95°C, and less than 0.1 % of free phenol content. The resulting mixture was thereafter heated with stirring at a temperature of 150°C for 8 hours to provide a yellowish solid silicon product.

Examples 1 to 9

The silicon products A to D thus obtained were incorporated to the epoxy resin together with the curing agent and suitable fillers in the listed amounts (parts by weight) in the Table to provide the individual epoxy resin encapsulating compositions of Examples 1 to 8.

In Example 7, the silicon product D was incorporated together with single epoxy denatured silicon compound.

In Example 9, amino denatured silicon compound having the above general formula [ii] and epoxy denatured silicon compound having the above general formula [iii] were separately admixed with the epoxy

resin, curing agent and suitable fillers in the listed amount to provide the epoxy resin encapsulating composition.

Epoxy resin used was the combination of orthocresol novolac type epoxy resin having epoxy equivalent weight of 195 and a softening point of 75°C and brominated epoxy resin having epoxy equivalent weight of 250 and a softening point of 90°C, the latter being added in a small amount as a flame retardant. As the curing agent for the epoxy resin, a phenol novolac having a molecular weight of 700, a softening point of 90°C, hydroxyl equivalent weight of 110 was used singly or in combination with tetrahydrophtalic anhydride. Inorganic filler used was one or combination of the two of antimony trioxide having an average particle size of 5 μ, fused silica having an average particle size of 20 μ, and crystalline silica having an average particle size of 14 μ. Colorant used was a carbon black. Mold release agent used was carnauba wax. Activator used was 2-undecyl imidazole. Coupling agent used was γ-glycydopropyl. The above components were admixed in Henschel mixer for about 2 to 5 minutes followed by being blended to melt between heated rolls so as to provide the individual cured encapsulation molds.

Comparative Examples 1 to 6

The listed components were admixed without the incorporation of the silicon product or with excess amount of the silicon product and processed in the same condition as in the above Examples to provide the individual cured encapsulation molds.

In Comparative Example 1, there is incorporated neither of the above silicon product nor known conventional epoxy resin improving additives including liquid or solid acrylonitrile butadiene rubber, amino denatured silicon compound, and epoxy denatured silicon compound.

In Comparative Example 2, liquid acrylonitrile butadiene rubber having a carboxyl equivalent weight of 1800, viscosity of 150000, and acryl content of 17.5 % was utilized instead of the silicon product in the above Examples and reacted in the same condition.

In Comparative Example 3, tetrahydrophthalic anhydride was used as the curing agent together with phenol novolac resin in equal amount. The other condition is same as in Comparative Example 2.

In Comparative Example 4, unreacted amino denatured silicon compound was singly incorporated in the composition.

In Comparative Example 5, instead of the silicon product used in the above Example, there were incorporated the combination of amino denatured silicon compound and solid acrylonitrile butadiene rubber having Mooney viscosity $ML_{1+4}$ of 50 at 100°C and acrylonitrile content of 35 %.

In Comparative Example 6, the silicon product A was incorporated in excess amount of as much as 100 parts by weight.

The samples obtained in accordance with Examples 1 to 9 and Comparative Examples 1 to 6 were subjected to the following standard tests for evaluation of the electrical conductivity, moisture resistance and internal stress developed in the cured encapsulation molds.

The electrical conductivity is the very informative value of the amount of impurity ions such as $Na^+$ and $Cl^-$ possibly present in the epoxy resin and can be determined according to the following test procedure. Each sample composition was heated at a temperature of 175°C for 5 hours to be completely cured. Then, the cured composition was ground to powder in a mortar. 10 g of the resulting powder was placed in a flask together with 10 cc of methanol and 10 g of refined water, which mixture was heated to boil and refluxed for 100 hours. Thereafter, the aqueous mixture was extracted by being filtered from the reflux condenser and was measured its electrical conductivity, the measured values are listed in the Table.

For evaluation of the moisture resistance, each sample composition was processed by transfer molding at 175°C for 3 minutes to provide a sample package which was a small outline 18-lead semiconductor package [SOP] encapsulating the semiconductor with a comb pattern aluminum conductor of 5 μ width formed thereon. The resulting package was after-cured at 175°C for 6 hours followed by being immersed for 5 seconds in a soldering bath maintained at 260°C. Thereafter the sample package [SOP] was observed using a microscope the presence of any cracks in the package. Further, 20 pieces of the same sample were subjected to a pressure cooker test [PCT] at 133°C, 3 atmospheric pressures, and a relative humidity [RH] of 100 % for different time intervals, i.e., 50, 100, 150, and 200 hours with respect to each sample package in order to examine the number of the samples suffering from failures or occurrences of open-circuit in the comb pattern aluminum conductor by the use of a multi-pin electric metering device. The measuring results or the number of the defective sample packages are listed in the Table.

For evaluation of the internal stress developed in the package, each sample composition was likewise processed by transfer molding at 175°C for 3 minutes to provide the like sample package [SOP] encapsulating the semiconductor and a piezoelectric strain gauge placed thereupon. The piezoelectric strain gauge is known to determine the strain by measuring the change of electrical resistance and was used to give the internal stress intended on the assumption that there is a direct proportionality between the stress and strain in the package. A small number of the piezoelectric strain gauges were formed separately on the center and periphery of the semiconductor each having an arrangement of including four gage elements elongated in four different directions at 45 degrees in relation to one another for measuring the strain in those directions. The package thus obtained was after-cured at 175°C for 6 hours. A ratio of the change in the electrical resistance ΔR of each gauge element after the after-cure treatment with respect to the original resistance R before the transfer molding was determined by the use of a suitable LSI circuit tester. The resulting measurements with respect to the four different directions were averaged to give the value (ΔR/R) in the Table.

In addition to the above test procedures, another evaluation of the package was used to observe any cracks possibly appearing in a passivation over the semiconductor in order to examine the influence of the internal stress upon the semiconductor. For this purpose, a sample package was made with respect to each sample composition listed in the Table in the same manner as in the previous testing procedures. The passivation used to be placed on the semiconductor was a film of phospho silicate glass. The resulting sample package was exposed to a wet atmosphere of 85 % relative humidity at 85 °C for 72 hours for being rendered hygroscopic followed by being immersed for 10 seconds in a soldering bath maintained at 260°C. Thereafter, the sample package was opened for observation of the presence of any cracks in the passivation on the semiconductor by the use of a microscope. The results were denoted in the Table. In the evaluation of the Table, O is used for indicating a good result, Δ for acceptable result, and X for unacceptable result.

It follows from the results of the Table that, when referring to the electrical conductivity, the incorporation of the known epoxy resin improving additives (Comparative Examples 2, 3 and 5) resulted in higher values which are believed to come from the higher concentration of impurity ions contained in the composition. This higher concentration are thought to be the cause of a higher possibility of occurrence of the open-circuit failures in the pressure cooker test. Although Examples 1 to 9 show the electrical conductivity in the same level as those of Comparative Examples 1 and 4, it is found that Examples 1 to 9 are less likely to suffer from the open-circuit failure. This confirms that the epoxy resin encapsulating composition in accordance with the present invention is capable of reducing or relaxing the heat stress applied to the package at the step of immersing the package in the soldering bath without damaging the package and without lowering the effect of the sealing or adhesion between the encapsulation and the semiconductor devices or the lead frame thereof. Further, when considering the evaluation for the internal stress in terms of the test results using the piezoelectric gauge and the observation of cracks in the passivation, the internal stress developed in the packages of the present invention (Examples 1 to 9) can be maintained at a minimum as opposed to the Comparative Examples. All of the above demonstrate the superiority of the present invention which satisfies both reduced internal stress and moisture-proof requirements.

**Claims**

1. An epoxy encapsulating composition comprising a blend of
(a) an epoxy resin; and
(b) a silicon product which is present in the blend in an amount of 0.5 to 30 parts by weight per 100 parts by weight of the epoxy resin and which is a reaction product of at least two silicon compounds having different functional groups that react together to form a linkage between them, the functional group of the silicon compounds being epoxy, amino, hydroxyl, carboxyl, cyano or mercapto groups.

2. A composition as set forth in claim 1, wherein the silicon product is the result of reacting a silicon compound containing an epoxy functional group with a silicon compound containing an amino functional group.

3. A composition according to claim 2, further comprising fused silica.

4. A composition as set forth in claim 1, wherein the silicon product is the result of reacting a first silicon compound containing an epoxy functional group, a second silicon compound containing an amino functional group and a third silicon compound containing a carboxyl functional group.

5. A composition as set forth in claim 1, 2 or 3, wherein the silicon product is obtained by separately adding silicon compounds having an epoxy group and an amino group to a molten phenol novolac which is a curing agent for the epoxy resin present in the composition.

6. A composition as set forth in any preceding claim, wherein the epoxy resin is the combination of an orthocresol novolac type epoxy resin and a brominated epoxy resin.

**Patentansprüche**

1. Epoxyharz-Einbettungsmasse, enthaltend eine Mischung aus
(a) einem Epoxyharz, und
(b) einem Siliciumprodukt, das in der Mischung in einem Gehalt von 0,5 bis 30 Gew.-Teilen je 100 Gew.-Teile Epoxyharz enthalten ist, und das das Reaktionsprodukt von mindestens zwei Siliciumverbindungen mit verschiedenen funktionellen Gruppen ist, die miteinander unter Ausbildung einer Bindung reagieren, wobei die funktionelle Gruppe der Siliciumverbindungen Epoxy-, Amino-, Hydroxyl-, Carboxyl-, Cyan- oder Mercaptogruppen sind.

2. Masse nach Anspruch 1, in der das Siliciumprodukt das Ergebnis der Umsetzung einer Siliciumverbindung, die funktionelle Epoxygruppen enthält, mit einer Siliciumverbindung, die funktionelle Aminogruppen enthält, ist.

3. Masse nach Anspruch 2, die ferner Quarzglas enthält.

4. Masse nach Anspruch 1, in der das Siliciumprodukt das Ergebnis der Umsetzung einer ersten Siliciumverbindung, die eine funktionelle Epoxygruppe enthält, mit einer zweiten Siliciumverbindung, die eine funktionelle Aminogruppe enthält, und einer dritten Siliciumverbindung, die eine funktionelle Carboxylgruppe enthält, ist.

5. Masse nach Anspruch 1, 2 oder 3, in der das Siliciumprodukt erhalten wird, indem Siliciumverbindungen mit Epoxygruppen und Aminogruppen getrennt zu geschmolzenem Phenolnovolak zugegeben werden, der ein Härtungsmittel für das in der Masse enthaltene Epoxyharz ist.

6. Masse nach einem der vorhergehenden Ansprüche, in der das Epoxyharz eine Kombination aus einem Qrthocresolnovolak-Epoxyharz und einem bromierten Epoxyharz ist.

**Revendications**

1. Composition d'encapsulage en résine époxy comprenant un mélange de :
a) une résine époxy, et
b) un produit de silicium présent dans le mélange en proportion de 0,5 à 30 parties en poids pour 100 parties en poids de la résine époxy, et consistant en un produit de réaction d'au moins deux composés de silicium présentant des groupes fonctionnels différents qui réagissent ensemble pour former une liaison entre eux, le groupe fonctionnel des composés de silicium consistant en des groupes époxy, amino, hydroxyle, carboxyle, cyano ou mercapto.

2. Composition selon la revendication 1, caractérisée en ce que le produit de silicium est le résultat de la réaction d'un composé de silicium contenant un groupe fonctionnel époxy avec un composé de silicium contenant un groupe fonctionnel amino.

3. Composition selon la revendication 2, caractérisée en ce qu'elle comprend en outre de la silice fondue.

4. Composition selon la revendication 1, caractérisée en ce que le produit de silicium est le résultat de la réaction d'un premier composé de silicium contenant un groupe fonctionnel époxy, avec un second composé de silicium contenant un groupe fonctionnel amino, et avec un troisième composé de silicium contenant un groupe fonctionnel carboxyle.

5. Composition selon l'une quelconque des revendications 1 à 3, caractérisée en ce que le produit de silicium est obtenu en ajoutant séparément des composés de silicium comportant un groupe époxy et un groupe amino, à un novolac de phénol fondu constituant un agent de durcissement de la résine époxy présente dans la composition.

6. Composition selon l'une quelconque des revendications précédentes, caractérisée en ce que la résine époxy est constituée par la combinaison d'une résine époxy de type novolac d'orthocresol, avec une résine époxy bromatée.